**Europäisches Patentamt**

**European Patent Office**

**Office européen des brevets**

(19)

(11) Numéro de publication: **0 161 975**
**B1**

(12)

# FASCICULE DE BREVET EUROPÉEN

(45) Date de publication du fascicule du brevet:
**03.02.88**

(51) Int. Cl.⁴: $C\ 01\ B\ 35/02$, $C\ 01\ B\ 35/04$

(21) Numéro de dépôt: **85400788.7**

(22) Date de dépôt: **22.04.85**

(54) **Procédé de fabrication de produits poreux en bore ou en composés du bore.**

(30) Priorité: **26.04.84 FR 8406578**

(43) Date de publication de la demande:
**21.11.85 Bulletin 85/47**

(45) Mention de la délivrance du brevet:
**03.02.88 Bulletin 88/5**

(84) Etats contractants désignés:
**AT BE CH DE GB IT LI NL SE**

(56) Documents cité:
**FR-A-1 508 451**
**US-A-2 463 404**
**US-A-2 794 708**

(73) Titulaire: **COMMISSARIAT A L'ENERGIE ATOMIQUE, 31/33, rue de la Fédération, F-75015 Paris (FR)**

(72) Inventeur: **Boncoeur, Marcel, 22, rue Marsoulan, F-75012 Paris (FR)**
Inventeur: **Hansz, Bernard, 28, rue Marcel Charon, F-91710 Vert Le Petit (FR)**
Inventeur: **Lieven, Thierry, 5, avenue Jean Jaurès, F-92120 Montrouge (FR)**

(74) Mandataire: **Mongrédien, André, c/o BREVATOME 25, rue de Ponthieu, F-75008 Paris (FR)**

**0 161 975**

## Description

La présente invention a pour objet un procédé de fabrication de produits poreux en bore ou en composés du bore, et notamment de produits de grande pureté enrichis en bore 10.

Pour certaines applications nucléaires, il est intéressant d'utiliser des composés enrichis en bore 10, notamment pour réaliser l'absorption des neutrons lents. Cependant, les méthodes connues actuellement pour la fabrication de bore 10, conduisent pour la plupart à du bore contenant un certain nombre d'impuretés, parmi lesquelles on trouve en particulier l'oxygène et le carbone.

De même, les procédés connus de fabrication de bore, tels que la réduction d'oxyde de bore $B_2O_3$ par le magnésium ou le calcium, conduisent à du bore impur. Par ailleurs, lors d'un stockage à l'air, le bore réagit avec l'oxygène pour donner de l'anhydride borique ou de l'acide borique suivant l'humidité ambiante et le bore est ainsi contaminé par de l'oxygène. Or, pour la fabrication de pièces à base de bore ou de borures métalliques par métallurgie de poudres, il est nécessaire de disposer de poudres de bore ou de borures cristallisés, de grande pureté, ayant par ailleurs des granulométries déterminées.

La présente invention a précisément pour objet un procédé de fabrication de produits poreux en bore ou en composés du bore qui permet l'obtention de produits de grande pureté, sous forme cristallisée, pouvant être transformés facilement en poudres ayant des granulométries voulues pour la réalisation de pièces par métallurgie des poudres.

Le procédé, selon l'invention, de fabrication de produits poreux en bore comprend successivement les étapes suivantes:

1) - mettre en suspension de la poudre de bore dans une solution d'un sel, d'un hydroxyde et/ou d'un oxyde de métal alcalin,

2) - séparer ensuite la poudre du liquide de la suspension par décantation,

3) - sécher la poudre ainsi séparée pour obtenir une poudre agglomérée, et

4) - soumettre la poudre agglomérée ainsi obtenue à au moins deux traitements thermiques effectués à des températures différentes, la dernière étape du traitement thermique étant effectuée à une température de 1500 à 2200°C et la première étape étant effectuée à une température inférieure à la dernière étape.

Le procédé tel que caractérisé ci-dessus, tire avantageusement profit du fait, qu'en utilisant comme produit de départ une solution aqueuse d'un sel, d'un hydroxyde et/ou d'un oxyde de métal alcalin contenant en suspension la poudre de bore, on introduit un fondant volatil (sel, hydroxyde ou oxyde de métal alcalin) entre les grains de poudre de bore, ce qui favorise les contacts entre les grains et la diffusion des impuretés lors des traitements thermiques ultérieurs. Ainsi, on peut obtenir de bons résultats par traitement thermique sans qu'il soit nécessaire de réaliser une étape de compression de la poudre.

Lors du traitement thermique, on transforme tout d'abord l'acide borique présent dans la poudre de bore en anhydride borique, puis on forme sur la surface externe de la poudre agglomérée une pellicule riche en carbure de bore $B_4C$, que l'on peut ensuite facilement détacher pour obtenir un produit poreux en bore de haute pureté. En raison de sa nature poreuse, ce produit peut être facilement transformé en poudre ayant une granulométrie appropriée pour la réalisation de pièces en bore par métallurgie des poudres.

Selon une variante de l'invention, on prépare des produits poreux en borures d'un métal M ou d'un métalloïde, par exemple de borure de silicium $SiB_6$, en utilisant comme produits de départ du bore et un oxyde du métal M ou un oxyde du métalloïde par exemple $SiO_2$. Dans ce cas, le procédé comprend successivement les étapes suivantes:

1) - mettre en suspension sous agitation de la poudre de bore et de la poudre d'un oxyde du métal M ou d'un oxyde du métalloïde dans une solution d'un sel, d'un oxyde et/ou d'un hydroxyde de métal alcalin,

2) - séparer ensuite le mélange de poudres du liquide de la suspension par décantation,

3) - sécher le mélange de poudres ainsi séparé pour obtenir une poudre agglomérée, et

4) - soumettre la poudre agglomérée ainsi obtenue à un traitement thermique comportant au moins deux étapes effectuées à des températures différentes de façon à purifier le bore et à transformer la poudre de bore en borure du métal M ou du métalloïde par réaction avec l'oxyde du métal M ou l'oxyde du métalloïde.

Comme précédemment, la présence d'un sel, d'un oxyde et/ou d'un hydroxyde de métal alcalin qui joue le rôle de fondant volatil, permet de favoriser la diffusion du bore et des impuretés et de favoriser la réaction de réduction de l'oxyde du métal M par le bore. De même, la présence de ce fondant permet d'accroître les contacts entre les grains et d'éviter d'avoir à comprimer la poudre avant de la soumettre au traitement thermique.

Généralement, pour la préparation de la suspension, on utilise un hydroxyde de métal alcalin tel que NaOH, LiOH ou KOH. On peut aussi utiliser un sel de métal alcalin tel que le borax $B_4O_7Na_2$ ou le carbonate de sodium $CO_3Na_2$. De préférence, on utilise une solution aqueuse de soude.

Pour mettre en oeuvre le procédé de l'invention, on mélange intimement la poudre de bore et eventuellement la poudre d'oxyde du métal M dans la solution de sel, d'hydroxyde et/ou d'oxyde du métal alcalin, puis on laisse décanter la matière solide dans un moule et on élimine le liquide en excès. Après cette opération, on sèche pour évaporer le liquide résiduel, par exemple par étuvage à une température d'environ 100°C. Ainsi, on obtient une poudre agglomérée, soit un gâteau solide et poreux que l'on peut facilement démouler.

La poudre de bore utilisée pour préparer la suspension a généralement une granulométrie inférieure à 60 μm et, de préférence, de 5 à 10 μm.

2

La poudre d'oxyde métallique utilisée pour préparer la suspension a généralement une granulométrie inférieure à 20 µm, et, de préférence, de 1 à 10 µm.

Pour préparer la suspension destinée à la fabrication de produits poreux en borures métalliques, on utilise des quantités de poudres de bore et d'oxyde métallique telles qu'elles correspondent à un excès de bore par rapport à la quantité requise pour l'obtention du borure métallique. La quantité de solution utilisée pour la préparation de la suspension représente généralement de 10 à 20 % en poids de la suspension et la concentration en oxyde, hydroxyde et/ou sel de métal alcalin de la solution est généralement de 0,01 à 0,05 %.

Dans la quatrième étape du procédé, on soumet alors ce gâteau à un traitement thermique comportant au moins deux étapes effectuées à des températures différentes. Généralement, le traitement thermique est effectué sous vide. Toutefois, dans certains cas, il est préférable de réaliser la ou les dernières etapes de ce traitement sous atmosphère de gaz neutre, par exemple sous balayage d'argon, d'hélium ou d'azote. Le nombre, la température et la durée des différentes étapes du traitement thermique sont choisies en fonction de la nature du produit à fabriquer.

Dans tous les cas, on règle la température et la durée de la dernière étape du traitement thermique en fonction de la dimension de grains que l'on veut obtenir. En effet, la dimension des grains du produit poreux augmente avec la durée du traitement thermique.

Pour la fabrication de produits poreux en bore, le traitement thermique comprend généralement trois étapes:
- une première étape effectuée à une température de 150 à 225°C pendant une durée suffisante pour transformer l'acide borique en anhydride borique,
- une deuxième étape effectuée à une température de 1500 à 1980°C pendant une durée suffisante pour stabiliser la pression à un niveau inférieur à $10^2$ Pa, et
- une troisième étape réalisée à une température de 1980 à 2020°C pendant une durée allant de 6 à 30 h.

Pour la fabrication de produits poreux en borures métalliques, on réalise généralement au moins trois étapes effectuées à des températures différentes allant de 800 à 2200°C, chacune des étapes étant effectuée à une température supérieure à celle de l'étape précédente et chacune des étapes étant réalisée sous vide ou sous gaz neutre tel que l'hélium.

Dans ce cas, on réalise, de préférence, la ou les premières étapes sous vide et les étapes suivantes sous balayage de gaz neutre, par exemple d'hélium.

Le procédé de l'invention s'applique en particulier à la fabrication de produits en borures de terres rares, en borures d'uranium, en borures de thorium, en borures de silicium, en borures de titane et en borures de zirconium.

Ce procédé se révèle en particulier très avantageux pour la fabrication de borures très riches en bore, tels que les borures de formule $B_xM$, où M représente un métal et x est un nombre allant de 6 à 100. En effet, la présence du fondant volatil constitué par l'hydroxyde, l'oxyde ou le sel de métal alcalin permet d'assurer une bonne diffusion du bore entre les grains de poudre d'oxyde métallique et d'obtenir ainsi, lors du traitement thermique, une réaction pratiquement complète du bore et de l'oxyde.

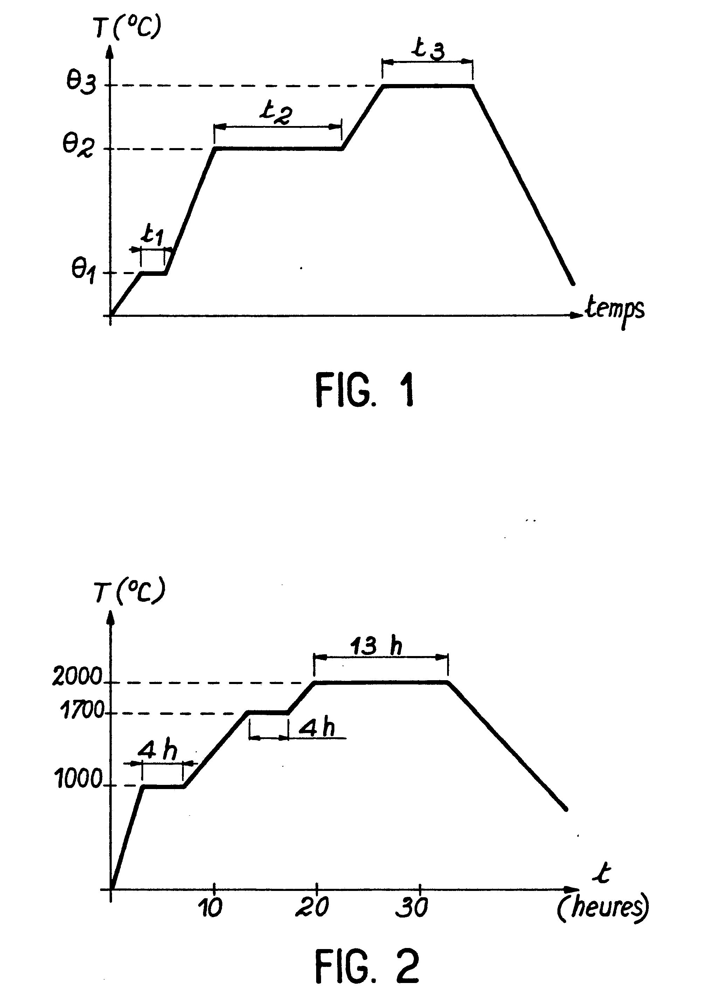

D'autres caractéristiques et avantages de l'invention apparaîtront mieux à la lecture des exemples suivants donnés bien entendu à titre illustratif et non limitatif, en référence aux figures 1 et 2 annexées qui sont des diagrammes représentant les cycles de traitement thermique utilisés pour la fabrication de produits poreux en bore (figure 1) et de produits poreux en borure de thorium (figure 2).

**Exemple 1:**

Fabrication de produits poreux en bore.

On part d'une poudre de bore amorphe et on met 15 kg de cette poudre en suspension dans une solution aqueuse de soude obtenue en mélangeant 23,3 ml de soude ayant une densité de 1,33 à 2 l d'eau permutée, puis on soumet l'ensemble à une agitation pendant 2 h. On introduit alors la suspension dans un moule percé de trous et on laisse décanter la poudre dans le moule tout en éliminant le liquide en excès. On soumet alors la poudre décantée dans le moule à une opération d'étuvage afin d'éliminer le liquide résiduel. L'étuvage est réalisé à une température de 100°C, sous air, pendant 192 h et l'on obtient, à la fin de cette opération, un gâteau de poudre agglomérée; on refroidit alors le gâteau dans l'étuve jusqu'à une température permettant sa manipulation, puis on sort le moule de l'étuve et on le laisse refroidir jusqu'à la température ambiante.

On démoule alors le gâteau et on le dispose dans un creuset de graphite sur des cales en nitrure de bore, à l'intérieur d'un four à induction sous vide pour réaliser le traitement thermique.

Dans un premier temps, la température du four est amenée à la température $\Theta_1$ de 150-225°C et maintenue pendant une heure à ce niveau afin de transformer l'acide borique en anhydride borique. On augmente alors la température jusqu'à $\Theta_2$ de 1850°C à une vitesse comprise entre 125 et 200°C par heure, puis on maintient la température $\Theta_2$ de 1850°C pendant une durée suffisante pour stabiliser la pression dans le four à un niveau inférieur à $10^2$ Pa. A la fin de cette opération, on élève encore la température jusqu'à $\Theta_3 = 1980$-2020°C en quatre heures, puis on maintient cette température $\Theta_3$ pendant une durée allant de 7 à 27 h qui est choisie en fonction de la taille moyenne finale de particules que l'on souhaite obtenir. On abaisse alors la température

3

jusqu'à l'ambiante à une vitesse comprise entre 100 et 200°C par heure.

Les différentes étapes de ce traitement sont illustrées sur la figure annexée qui est un diagramme représentant l'évolution de la température (en °C) en fonction du temps (en heures) pendant le cycle de traitement thermique.

A sa sortie du four, le lingot comporte une peau externe riche en $B_4C$ facilement détachable et après élimination de cette peau, on peut concasser grossièrement le lingot.

On soumet ensuite les morceaux ainsi concassés à une opération de broyage pour obtenir la granulométrie voulue, ce qui peut être réalisé dans un broyeur vibrant à jarre en acier garnie de boulets en acier avec un coefficient de remplissage d'un tiers de poudre et d'un tiers de boulets en volume. On peut réaliser le broyage pendant une heure, avec une fréquence de vibrations de 25 Hz et une amplitude de 2 mm. On obtient ainsi une poudre de bore que l'on classe en différentes fractions granulométriques par passage au travers de tamis vibrants. On procède ensuite à l'élimination des particules de fer provenant du broyage, qui sont présentes dans chaque fraction granulométrique; ceci peut être effectué à l'aide d'un dispositif magnétique disposé convenablement au-dessus d'une gouttière vibrante.

On traite de la même façon différentes poudres de bore ayant des teneurs différentes en C et en oxygène, puis on détermine les taux d'oxygène et les taux de carbone des poudres obtenues en fin d'opération. Les résultats sont donnés dans le tableau 1 qui suit, où l'on a indiqué également les températures et durées de la deuxième étape du traitement thermique. On précise que dans ces exemples, la première étape du traitement thermique a été effectuée à $\Theta_1$ : 200°C pendant 1 h et la troisième étape à une température $\Theta_3$ comprise entre 1980 et 2000°C pendant une durée comprise entre 7 et 27 heures.

Au vu de ce tableau, on constate que, grâce au procédé de l'invention, on peut abaisser fortement la teneur en oxygène de la poudre de bore et sensiblement la teneur en carbone.

Par ailleurs, on détermine la dimension moyenne de grains des produits poreux obtenus à la suite de la troisième étape de traitement thermique lorsque celui-ci est réalisé à des températures et pendant des durées différentes. Les résultats obtenus sont donnés dans le tableau 2 ci-après. On constate que le produit est formé de cristaux de taille suffisante pour qu'une opération de frittage de la poudre soit possible.

**Exemple 2:**

Fabrication de produits poreux en borure de thorium.

On part d'une poudre de bore de granulométrie inférieure à 50 μm et on met 11 kg de cette poudre ainsi que 3,9 kg d'oxyde de thorium de granulométrie inférieure à 10 μm en suspension dans une solution aqueuse de soude obtenue en mélangeant 23,3 ml de soude ayant une densité de 1,33 à 2 l d'eau permutée.

La fabrication du gâteau est identique au cas de l'exemple 1.

Le traitement thermique est réalisé en 3 étapes comme schématisé sur la figure 2 jointe en annexe.

La température du four est amenée à $\Theta_1 = 1000$°C en 3 heures puis maintenue à ce niveau durant 4 heures. On augmente alors la température jusqu'à $\Theta_2 = 1700$°C en 6 heures, la durée du palier étant de 4 heures. On élève ensuite la température jusqu'à 2000°C en 2,5 heures et on maintient cette temperature durant 13 heures. On procède sous balayage de gaz neutre tel que Argon ou Hélium durant tout ou partie du palier de traitement à la température $\Theta_2$. La température est ensuite abaissée jusqu'à l'ambiante à la vitesse de 100°C/heure. On soumet le lingot obtenu au traitement de broyage et de sélection décrit dans l'exemple 1.

La poudre ainsi obtenue est un borure de thorium. Les teneurs en impuretés sont typiquement: teneur en oxygène inférieur à 60 ppm, teneur en carbone de l'ordre de 0,2 %.

**Tableau 1**

| Taux d'oxygène initial (%) | Taux de carbone initial (%) | Température $\Theta_2$ (°C) | Durée de palier à $\Theta_2$ (h) | Taux d'oxygène final (ppm) | Taux de carbone final (%) | Etat critallin |
|---|---|---|---|---|---|---|
| 3,2 | 1,2 | 1850 | 17 | 360 | 0,47 | cristallisé |
| 3,2 | 1,2 | 1850 | 16 | 380 | 0,58 | " |
| 5,7 | 1,91 | 1850 | 17 | 500 | 1,15 | " |
| 13,1 | 1,51 | 1850 | 18 | 800 | 1,02 | " |

4

**Tableau 2**

| $\Theta_1$ (en °C) | durée du palier à $\Theta_1$ (en h) | $\Theta_2$ (en °C) | durée du palier à $\Theta_2$ (en h) | $\Theta_3$ (en °C) | durée du palier à $\Theta_3$ (en h) | granulométrie moyenne (en $\mu$m) |
|---|---|---|---|---|---|---|
| 200 | 1 | 1850 | 17 | 1980 | 7 | 35 |
| 200 | 1 | 1850 | 17 | 1980 | 17 | 50 |
| 200 | 1 | 1850 | 17 | 2000 | 27 | 75 |

## Revendications

1. Procédé de fabrication de produits poreux en bore, caractérisé en ce qu'il comprend successivement les étapes suivantes:

1) - mettre en suspension de la poudre de bore dans une solution d'un sel, d'un hydroxyde et/ou d'un oxyde de métal alcalin,

2) - séparer la poudre du liquide de la suspension par décantation,

3) - sécher la poudre ainsi séparée pour obtenir une poudre agglomérée, et

4) - soumettre la poudre agglomérée ainsi obtenue à au moins deux traitements thermiques effectués à des températures différentes, la dernière étape du traitement thermique étant effectuée à une température de 1500 à 2200°C et la première étape étant effectuée à une température inférieure à la dernière étape.

2. Procédé de fabrication de produits poreux en borure d'un métal M ou d'un métalloïde, caractérisé en ce qu'il comprend successivement les étapes suivantes:

1) - mettre en suspension, sous agitation, de la poudre de bore et de la poudre d'un oxyde du métal M ou d'un oxyde du métalloïde dans une solution d'un sel, d'un oxyde et/ou d'un hydroxyde de métal alcalin,

2) - séparer ensuite le mélange de poudres du liquide de la suspension par décantation,

3) - sécher le mélange de poudres ainsi séparées pour obtenir une poudre agglomérée, et

4) - soumettre la poudre agglomérée ainsi obtenue à un traitement thermique comportant au moins deux étapes effectuées à des températures différentes, de façon à purifier le bore et à transformer la poudre de bore en borure du métal M ou du métalloïde par réaction avec l'oxyde du métal M ou l'oxyde du métalloïde.

3. Procédé selon l'une quelconque des revendications 1 et 2, caractérisé en ce que l'hydroxyde de métal alcalin est choisi dans le groupe comprenant NaOH, LiOH ou KOH.

4. Procédé selon l'une quelconque des revendications 1 et 2, caractérisé en ce que le sel de métal alcalin est $B_4O_7Na_2$ ou $CO_3Na_2$.

5. Procédé selon l'une quelconque des revendications 1 et 2, caractérisé en ce que l'on utilise une solution aqueuse de soude pour préparer la suspension.

6. Procédé selon la revendication 1, caractérisé en ce que le traitement thermique comprend trois etapes:

- une première étape effectuée à une température de 150 à 225°C pendant une durée suffisante pour transformer l'acide borique en anhydride borique,

- une deuxième étape effectuée à une température de 1500 à 1980°C pendant une durée suffisante pour stabiliser la pression à un niveau inférieur à $10^2$ Pa, et

- une troisième étape réalisée à une température de 1980 à 2020°C pendant une durée allant de 6 à 30 heures.

7. Procédé selon la revendication 2, caractérisé en ce que le traitement thermique comprend au moins trois étapes réalisées à des températures de 800 à 2200°C, chacune des étapes étant effectuée à une température supérieure à celle de l'étape précédente et chacune des étapes étant réalisée sous vide ou sous gaz neutre tel que l'hélium.

8. Procédé selon la revendication 2, caractérisé en ce que le métal M est choisi dans le groupe comprenant les terres rares, l'uranium, le thorium, le silicium, le titane et le zirconium.

## Claims

1. A process for the production of porous boron products comprising successively the following stages:

1) - suspending the boron powder in a solution of an alkali metal salt, hydroxide and/or oxide,

2) - then separating the powder from the suspension liquid by settling,

3) - drying the thus separated powder to obtain an agglomerated powder, and

4) - subjecting the thus obtained agglomerated powder to at least two heat treatments performed at different temperatures, the final stage of the heat treatment being performed at a temperature of 1500 to 2200°C and the first stage being performed at a temperature below that of the final stage.

2. A process for the production of porous products of a boride of a metal M or a metalloid, wherein it successively comprises the following stages:

1) - suspending, accompanied by stirring, the boron powder and the powder of an oxide of metal M or an oxide of the metalloid in a solution of an alkali metal salt, oxide and/or hydroxide,
- then separating the powder mixture from the suspension liquid by settling,
3) - drying the thus separated powder mixture to obtain an agglomerated powder, and
4) - subjecting the thus obtained agglomerated powder to a heat treatment comprising at least two stages performed at different temperatures, so as to purify the boron and transform the boride powder of metal M or the metalloid by reaction with the oxide of metal M or the oxide of the metalloid.

3. A process according to either of the claims 1 and 2, wherein the alkali metal hydroxide is chosen from the group including MaOH, LiOH or KOH.

4. A process according to either of the claims 1 and 2, wherein the alkali metal salt is $Na_2B_4O_7$ or $Na_2CO_3$.

5. A process according to either of the claims 1 and 2, wherein use is made of an aqueous soda solution for preparing the suspension.

6. A process according to claim 1, wherein the heat treatment comprises three stages:
- a first stage performed at a temperature of 150 to 225°C for a time adequate for converting the boric acid into boric anhydride,
- a second stage performed at a temperature of 1500 to 1980°C for a time adequate for stabilizing the pressure at a level below $10^2$ Pa, and
- a third stage performed at a temperature of 1980 to 2020°C for a time between 60 and 30 h.

7. A process according to claim 2, wherein the heat treatment comprises at least three stages performed at temperatures of 800 to 2200°C, each of the stages being performed at a temperature higher than that of the preceding stage and each of the stages is performed under vacuum or under a neutral gas, such as helium.

8. A process according to claim 2, wherein the metal M is chosen from the group including rare earth, uranium, thorium, silicon, titanium and zirconium.

**Patentansprüche**

1. Verfahren zur Herstellung poröser produkte aus Bor, dadurch gekennzeichnet, daß es die nachstehenden aufeinanderfolgenden Stufen umfaßt:
(1) Herstellen einer Suspension von Borpulver in einer Lösung eines Salzes, Hydroxids und/oder Oxids eines Alkalimetalls,
(2) Abtrennen des Pulvers von der Suspensionsflüssigkeit durch Dekantieren,
(3) Trocknen des so abgetrennten Pulvers, um ein agglomeriertes Pulver zu erhalten, und
(4) Unterziehen des so erhaltenen, agglomerierten pulvers wenigstens zwei, bei unterschiedlichen Temperaturen durchgefuhrten Wärmebehandlungen, wobei die letzte Stufe der Wärmebehandlung bei einer Temperatur von 1500 bis 2200°C und die erste Stufe bei einer niedrigeren Temperatur als der der letzten Stufe durchgeführt werden.

2. Verfahren zur Herstellung poröser produkte aus einem Borid eines Metalls M oder eines Halbmetalls (Metalloids), dadurch gekennzeichnet, daß es die nachstehenden, aufeinanderfolgenden Stufen umfaßt:
(1) Herstellen einer Suspension, unter Rühren, von Borpulver und eines Pulvers eines Oxids des Metalls oder eines Oxids des Halbmetalls in einer Lösung eines Salzes, Oxids und/oder Hydroxids eines Alkalimetalls,
(2) danach Abtrennen der Pulvermischung von der Suspensionsflüssigkeit durch Dekantieren,
(3) Trocknen der so abgetrennten Pulvermischung, um ein agglomeriertes Pulver zu erhalten, und
(4) Unterziehen des so erhaltenen, agglomerierten Pulvers einer Wärmebehandlung, umfassend mindestens zwei bei verschiedenen Temperaturen durchgeführte Stufen, um so das Bor zu reinigen und das Borpulver durch Reaktion mit dem Oxid des Metalls M oder dem Oxid des Halbmetalls in en Borid des Metalls M oder des Halbmetalls zu überführen.

3. Verfahren nach den Ansprüchen 1 und 2, dadurch gekennzeichnet, daß das Alkalimetallhydroxid aus der Gruppe NaOH, LiOH oder KOH gewählt wird.

4. Verfahren nach den Ansprüchen 1 und 2, dadurch gekennzeichnet, daß das Alkalimetallsalz $B_4O_7Na_2$ oder $CO_3Na_2$ ist.

5. Verfahren nach den Ansprüchen 1 und 2, dadurch gekennzeichnet, daß man zur Herstellung der Suspension eine wäßrige Sodalösung verwendet.

6. Verfahren nach Anspruch 1, dadurch gekennzeichnet, daß die Wärmebehandlung drei Stufen umfaßt:
- eine erste Stufe, die bei einer Temperatur von 150 bis 225°C über eine ausreichende Zeit durchgeführt wird, um die Borsäure in Borsäureanhydrid zu überführen.
- eine zweite Stufe, die bei einer Temperatur von 1500 bis 1980°C über eine ausreichende Zeit durchgeführt wird, um den Druck bei einem Niveau von weniger als $10^2$ Pa zu stabilisieren und
- eine dritte Stufe, die bei einer Temperatur von 1980 bis 2020°C über eine Zeit von 6 bis 30 Stunden durchgeführt wird.

7. Verfahren nach Anspruch 2, dadurch gekennzeichnet, daß die Wärmebehandlung mindestens drei Stufen umfaßt, die bei Temperaturen von 800 bis 2200°C durchgeführt werden, wobei jede der Stufen bei einer Temperatur über derjenigen der vorangehenden Stufe durchgeführt und jede der Stufen unter Vakuum oder einem neutralen Gas, wie Helium, durchgeführt wird.

6

8. Verfahren nach Anspruch 2, dadurch gekennzeichnet, daß das Metall M gewählt wird aus der Gruppe der Seltenen Erden, Uran, Thorium, Silicium, Titan und Zirkonium.

FIG. 1

FIG. 2

1